# EUROPÄISCHE PATENTSCHRIFT

(11) **EP 3 341 630 B1**
(45) Veröffentlichungstag und Bekanntmachung des Hinweises auf die Patenterteilung: **10.03.2021**
(21) Anmeldenummer: 16766476.2
(22) Anmeldetag: 17.08.2016
(51) Int. Cl.: F16F 15/134, F16F 15/14

(54) **KUPPLUNGSSCHEIBE MIT FLIEHKRAFTPENDEL**
CLUTCH DISK COMPRISING A CENTRIFUGAL PENDULUM
DISQUE D'EMBRAYAGE ÉQUIPÉ D'UN PENDULE A FORCE CENTRIFUGE

(30) Priorität: 27.08.2015 DE 102015216356
(43) Veröffentlichungstag der Anmeldung: 04.07.2018
(73) Patentinhaber: Schaeffler Technologies AG & Co. KG, 91074 Herzogenaurach (DE)
(72) Erfinder: WELLER, Uwe, 76229 Karlsruhe (DE); LEHMANN, Steffen, 76275 Ettlingen (DE); RUSCH, Alain, 67760 Gambsheim (FR); FRANZ, Evgenij, 76437 Rastatt (DE); HEPPERLE, Walter, 77652 Offenburg (DE)
(86) Internationale Anmeldenummer: PCT/DE2016/200383
(87) Internationale Veröffentlichungsnummer: WO 2017/032370

(56) Entgegenhaltungen:
- EP-A2- 0 320 955
- EP-A2- 2 706 262
- WO-A1-2014/122367
- WO-A1-2017/010836
- DE-A1-102011 086 532
- DE-A1-102013 200 143
- FR-A1- 3 011 605
- US-A1- 2010 269 497

## Beschreibung

Die Erfindung betrifft eine Kupplungsscheibe mit einem Drehschwingungsdämpfer mit einem Eingangsteil und einem Ausgangsteil und einer in Umfangsrichtung zwischen dem Eingangsteil und dem Ausgangsteil wirksam angeordneten Federeinrichtung, wobei die Federeinrichtung aus hintereinander geschalteten, durch einen Zwischenflansch getrennten ersten und zweiten Federelementen gebildet ist, sowie einem Fliehkraftpendel mit einem um eine Drehachse der Kupplungsscheibe angeordneten Pendelmassenträger und an diesem auf Pendelbahnen pendelfähig aufgenommenen, über den Umfang verteilt angeordneten Pendelmassen.

Kupplungsscheiben mit einem Drehschwingungsdämpfer mit zwischen einem Eingangsteil und einem Ausgangsteil angeordneten ersten und zweiten Federelementen, die unter Zwischenschaltung eines Zwischenflanschs in Reihe geschaltet sind, sind beispielsweise aus der DE 10 2008 039 630 A1 bekannt.

Aus der vorveröffentlichten deutschen Patentanmeldung Nr. 10 2014 219 271.4 ist weiterhin eine Kupplungsscheibe bekannt, bei der ein Pendelflansch mit beidseitig pendelfähig und über den Umfang verteilt angeordneten Pendelmassen eines Fliehkraftpendel mit dem Ausgangsteil eines Drehschwingungsdämpfers verbunden ist.

Hierbei sind ein Hauptdämpfer mit ersten Federelementen und ein Leerlaufdämpfer mit zweiten Federelementen in Reihe geschaltet. Die die Federelemente beaufschlagenden Flanschteile sind dabei jeweils separat mit einer Nabe drehschlüssig verbunden.

Desweiteren ist aus der vorveröffentlichten internationalen Anmeldung WO2015149771, wobei die Priorität der deutschen Patentanmeldung Nr. 10 2014 206 154.7 in Anspruch genommen ist, eine Kupplungsscheibe mit einem auf einer Nabe der Kupplungsscheibe drehfest angeordneten Fliehkraftpendel mit einem aus zwei Seitenteilen gebildeten Pendelmassenträger bekannt, zwischen denen axial über den Umfang verteilt Pendelmassen pendelfähig aufgenommen und mittels einer Radialfederung radial elastisch abgestützt sind

Weiterhin offenbart das Dokument DE102011086532, welches als nächstliegender Stand der Technik betrachtet ist, eine Kupplungsscheibe (mit einem Drehschwingungsdämpfer mit einem Eingangsteil und einem Ausgangsteil und einer in Umfangsrichtung zwischen dem Eingangsteil und dem Ausgangsteil wirksam angeordneten Federeinrichtung, wobei die Federeinrichtung aus ersten und zweiten Federelementen gebildet ist, sowie einem Fliehkraftpendel mit einem um eine Drehachse der Kupplungsscheibe angeordneten Pendelmassenträger und an diesem auf Pendelbahnen pendelfähig aufgenommenen, über den Umfang verteilt angeordneten Pendelmassen, wobei der Pendelmassenträger drehfest mit einem Ausgangflanschteil gekoppelt und auf dem Ausgangsteil zentriert aufgenommen ist.

Aufgabe der Erfindung ist die vorteilhafte Weiterbildung einer Kupplungsscheibe mit einem Drehschwingungsdämpfer und einem Fliehkraftpendel. Insbesondere soll die Schwingungsisolation der Kupplungsscheibe gegenüber Drehschwingungen verbessert werden. Insbesondere soll die Anpassung der Kupplungsscheibe an vorgegebene Anwendungen verbessert werden.

Die Aufgabe wird durch den Gegenstand des Anspruchs 1 gelöst. Die von diesem abhängigen Ansprüche geben vorteilhafte Ausführungsformen des Gegenstands des Anspruchs 1 wieder.

Die vorgeschlagene Kupplungsscheibe ist für einen Einsatz in einer Reibungskupplung vorgesehen. Die Reibungskupplung kann als Trennkupplung des Antriebsstrangs zwischen einer Brennkraftmaschine und einem Getriebe dienen. Die Reibungskupplung kann in hybridischen Antriebssträngen, in Antriebssträngen mit handgeschalteten oder automatisiert geschalteten Getrieben eingesetzt sein. Im Sinne der Erfindung ist eine Reibungskupplung mit der vorgeschlagenen Kupplungsscheibe, eine Drehmomentübertragungseinrichtung mit einem Schwungrad, insbesondere einem Zweimassenschwungrad, einer Reibungskupplung und der vorgeschlagenen Kupplungsscheibe insbesondere als Baueinheit ausdrücklich umfasst. Insbesondere kann in einer Drehmomentübertragungseinrichtung ein Dämpfungskonzept mit der vorgeschlagenen Kupplungsscheibe vorgesehen sein, bei dem zwischen einer Primärschwungmasse und einer Sekundärschwungmasse die Reibungskupplung, zumindest ein Drehschwingungsdämpfer und zumindest ein Fliehkraftpendel vorgesehen sind, wobei ein Drehschwingungsdämpfer und ein Fliehkraftpendel in der vorgeschlagenen Weise in der Kupplungsscheibe angeordnet sind.

Die vorgeschlagene, um eine Drehachse, beispielsweise die Drehachse der Reibungskupplung verdrehbar angeordnete Kupplungsscheibe enthält hierzu einen Drehschwingungsdämpfer wie Torsionsschwingungsdämpfer mit einem Eingangsteil und einem Ausgangsteil. In Umfangsrichtung zwischen Eingangsteil und Ausgangsteil ist eine Federeinrichtung wirksam angeordnet. Das Eingangsteil nimmt bevorzugt radial außen Reibbeläge zur Bildung eines Reibschlusses mit entsprechenden Gegenreibflächen einer Reibungskupplung auf und dient damit als Belagträger. Das Eingangsteil kann aus einem einzigen, als Flanschteil ausgebildeten Belagträger gebildet sein. Das Eingangsteil kann aus zwei axial beabstandeten und miteinander beispielsweise mittels Abstandsbolzen verbundenen Flanschteilen gebildet sein, wobei eines der Flanschteile als Belagträger ausgebildet ist. Das Eingangsteil beaufschlagt die Federeinrichtung eingangsseitig. Das Ausgangsteil kann aus einer Nabe, die mit einer Welle, beispielsweise einer Getriebeeingangswelle drehschlüssig verbunden ist und zumindest einem mit der Nabe mit Verdrehspiel oder ohne Verdrehspiel verbundenen Flanschteil gebildet sein. Im Falle eines vorgesehenen Verdrehspiels kann über den Verdrehwinkel des Verdrehspiels zwischen zumindest einem Flanschteil und Nabe eine weitere Federeinrichtung als Leerlaufdämpfer wirksam angeordnet sein. Das zumindest eine ausgangsseitige Flanschteil kann axial neben einem einzelnen eingangsseitigen Flanschteil wie Belagträger angeordnet sein. Bei zwei axial beabstandeten eingangsseitigen Flanschteilen können ein oder mehrere ausgangsseitige Flanschteile axial zwischen den beiden eingangsseitigen Flanschteilen angeordnet sein. Das zumindest eine Flanschteil beaufschlagt die Federeinrichtung ausgangsseitig, so dass bei einer Verdrehung des Eingangsteils und des Ausgangsteils gegeneinander die Federelemente der Federeinrichtung komprimiert werden und Energie aufnehmen und bei einer Rückverdrehung wieder abgeben. Über zumindest einen Teil einer Relativverdrehung zwischen Eingangsteil und Ausgangsteil kann eine Reibeinrichtung wirksam vorgesehen sein.

Die Federeinrichtung ist aus zumindest zwei hintereinander geschalteten Federelementen gebildet, wobei zwischen zwei Federelementen ein Zwischenflansch angeordnet ist. Hierbei können die ersten Federelemente von dem Ausgangsteil und dem Zwischenflansch und die zweiten Federelemente von dem Zwischenflansch und dem Ausgangsteil beaufschlagt sein. Der Zwischenflansch kann axial zwischen zwei ausgangsseitigen Flanschteilen oder bei einem einzigen ausgangsseitigen Flanschteil axial benachbart zu diesem angeordnet sein.

Gemäß einem vorteilhaften Ausführungsbeispiel sind die ersten und zweiten Federelemente zwischen zwei ausgangsseitigen Flanschteilen unter Zwischenschaltung des Zwischenspeichers angeordnet. Die ausgangsseitigen Flanschteile sind mit Verdrehspiel an der Nabe aufgenommen. Abhängig von der Drehmomentrichtung - Zug- oder Schubbelastung - beaufschlagt das Eingangsteil eines der beiden ausgangsseitigen Flanschteile, wobei dieses von der mit Verdrehspiel ausgebildeten Verzahnung zwischen Flanschteilen und Nabe in Umfangsrichtung abhebt, während das andere Flanschteil das über die Federeinrichtung übertragene Drehmoment über die Verzahnung auf die Nabe überträgt.

Die Federelemente können aus über den Umfang angeordneten Schraubendruckfedern, Tellerfederpaketen, Elastomerblöcken und/oder dergleichen gebildet sein. Mehrere Schraubendruckfedern können radial ineinander geschachtelt sein und damit ein Federelement bilden. Ineinander geschachtelte Schraubendruckfedern können unterschiedlich lang ausgebildet sein, um eine mehrstufige Federkennlinie der Federkraft eines Federelements gegen den Verdrehwinkel von Ein- und Ausgangsteil zu bilden.

Alternativ oder zusätzlich können Beaufschlagungseinrichtungen des Eingangsteils, des Ausgangsteils und/oder des Zwischenflanschs zur Beaufschlagung radial ineinander geschachtelter Schraubendruckfedern auf unterschiedlichen Umfängen angeordnet sein, so dass der eine Teil der Schraubendruckfedern bei kleineren Verdrehwinkeln als der andere Teil der ineinander geschachtelten Schraubendruckfedern beaufschlagt wird. Die ersten und zweiten Federelemente beziehungsweise die zu diesen gehörigen Schraubendruckfedern können dieselbe oder verschiedene Steifigkeiten aufweisen. Eine unterschiedliche Ausbildung der Steifigkeiten der ersten und zweiten Federelemente kann insbesondere bei unterschiedlichen Anforderungen an die Kupplungsscheibe in Zug- und Schubrichtung vorteilhaft sein.

Das vorgeschlagene Fliehkraftpendel weist einen um eine Drehachse der Kupplungsscheibe angeordneten Pendelmassenträger auf. An dem Pendelmassenträger sind auf Pendelbahnen pendelfähig Pendelmassen aufgenommen, die über den Umfang verteilt angeordnet sind. Der Pendelmassenträger kann als Pendelflansch ausgebildet sein, an dem beidseitig Pendelmassen aufgenommen sind, wobei axial gegenüberliegenden Pendelmassen mittels den Pendelflansch durchgreifender Verbindungsmittel miteinander zu Pendelmasseneinheiten verbunden sind. Alternativ kann der Pendelmassenträger aus zwei axial nebeneinander angeordneten und in bevorzugter Weise miteinander verbundenen Seitenteilen gebildet sein, die einen axial erweiterten Pendelabschnitt aufweisen, in dem die Pendelmassen pendelfähig aufgenommen sind.

Die vorgeschlagene Kupplungsscheibe weist ein Fliehkraftpendel auf, dessen Pendelmassenträger drehfest mit dem Zwischenflansch gekoppelt ist. Zur Zentrierung des Pendelmassenträgers und dem mit diesem verbundenen Zwischenflansch ist der Pendelmassenträger auf dem Ausgangsteil zentriert aufgenommen. Dabei wird in vorteilhafter Weise der Zwischenflansch mit seinem geringen Massenträgheitsmoment bedämpft.

Gemäß einer vorteilhaften Ausführungsform der Kupplungsscheibe ist an der Nabe des Ausgangsteils ein axialer Bereich wie Ansatz vorgesehen, an dem der Pendelmassenträger begrenzt verdrehbar und zentriert aufgenommen ist.

Zwischen dem Pendelmassenträger und dem Ausgangsteil, beispielsweise dessen Nabe kann eine Reibhülse angeordnet sein. Die Reibhülse kann an dem Pendelmassenträger oder an der Nabe drehfest angeordnet sein und mit einer gegenüber dieser verdrehbaren Gegenreibfläche eine Reibeinrichtung bilden. Alternativ zu der Reibhülse kann eine Gleithülse vorgesehen sein, die die Reibung zwischen Pendelmassenträger und Ausgangsteil vermindert. Alternativ kann ein Wälz- oder Gleitlager zwischen Pendelmassenträger und Ausgangsteil vorgesehen sein.

Gemäß einer vorteilhaften Ausführungsform der Kupplungsscheibe können der Drehschwingungsdämpfer und das Fliehkraftpendel axial nebeneinander angeordnet sein.

In einer alternativen Ausführungsform können Drehschwingungsdämpfer und Fliehkraftpendel ineinander geschachtelt ausgebildet sein. Beispielsweise kann der Zwischenflansch als Pendelmassenträger ausgebildet sein. Hierbei können die Pendelmassen des Fliehkraftpendels radial außerhalb oder radial innerhalb der Federelemente des Drehschwingungsdämpfers angeordnet sein. Alternativ können die Pendelmassen axial benachbart zu den Federelementen in im Wesentlichen gleichem Durchmesser angeordnet sein.

Bei einer axial nebeneinander vorgesehenen Bauweise des Drehschwingungsdämpfers und des Fliehkraftpendels kann der Pendelmassenträger mittels axial ausgerichteter, das Eingangsteil, insbesondere ein Flanschteil des Belagträgers, insbesondere den Belagträger durchgreifender Abstandsbolzen mit dem Zwischenflansch verbunden sein. Der Durchgriff der Abstandsbolzen erfolgt an Ausnehmungen wie beispielsweise gebogenen Langlöchern des Eingangsteils, um eine Relativverdrehung zwischen Zwischenflansch und Eingangsteil zuzulassen. Hierbei kann ein Anschlag der Abstandsbozen an umfangsbegrenzenden Wandungen der Ausnehmungen einen Verdrehwinkel zwischen Eingangsteil und Ausgangsteil begrenzen.

Um eine Verlagerung der radial über der Drehachse befindlichen Pendelmassen nach radial innen insbesondere bei stehender Kupplungsscheibe oder mit geringer Drehzahl drehender Kupplungsscheibe zu verhindern, können die Pendelmassen mittels radial wirksamer Federelemente, beispielsweise Schraubendruckfedern gegenüber dem Pendelmassenträger abgestützt sein.

Das vorgeschlagene Fliehkraftpendel kann beispielsweise ähnlich wie das in der veröffentlichten internationalen Anmeldung WO2015149771, ausgebildet sein. Im Unterschied zu dieser ist das Fliehkraftpendel verdrehbar und zentriert auf der Nabe des Ausgangsteils und nicht drehfest mit dieser verbunden. Insoweit ist das vorgeschlagene Fliehkraftpendel dem Zwischenflansch und nicht dem Ausgangsteil zugeordnet.

Die Erfindung wird anhand des in den Figuren 1 bis 4 dargestellten Ausführungsbeispiels näher erläutert. Dabei zeigen:
Figur 1 einen Schnitt durch ein Ausführungsbeispiel der vorgeschlagenen Kuppscheibe,
Figur 2 eine geschnittene Ansicht der Kupplungsscheibe der Figur 1,
Figur 3 die Kupplungsscheibe der Figuren 1 und 2 in Explosionsdarstellung und
Figur 4 ein Prinzipschaltbild der vorgeschlagenen Kupplungsscheibe.

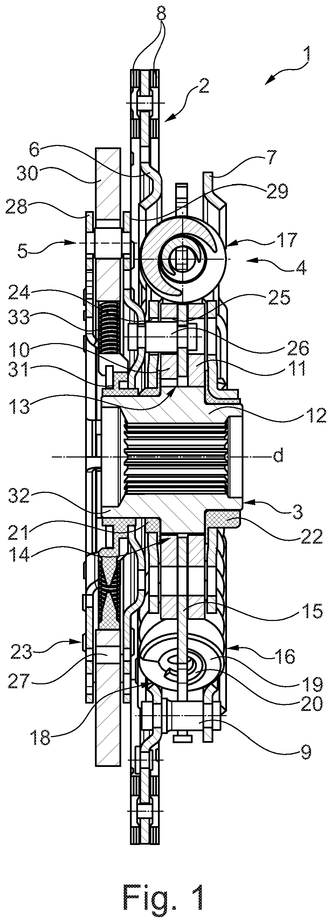

Die Figur 1 zeigt die um die Drehachse d angeordnete Kupplungsscheibe 1 mit dem Eingangsteil 2 und dem Ausgangsteil 3 sowie dem zwischen diese angeordneten Drehschwingungsdämpfer 4 und das Fliehkraftpendel 5 im Schnitt.

Das Eingangsteil 2 ist aus den beiden axial beabstandeten Flanschteilen 6, 7 gebildet.

Das Flanschteil 6 dient dabei als Belagträger und nimmt radial außen die Reibbeläge 8 auf. Die Flanschteile 6, 7 sind mittels der Abstandsbolzen 9 fest miteinander verbunden.

Das Ausgangsteil 3 ist aus den beiden Flanschteilen 10, 11 gebildet, die mit der Nabe 12 mittels der Verzahnung 13 unter Ausbildung eines Verdrehspiels 14 drehfest verbunden sind. Axial zwischen den beiden Flanschteilen 10, 11 ist schwimmend der Zwischenflansch 15 angeordnet.

Die Federeinrichtung 16 ist aus den ersten Federelementen 17 und den zweiten Federelementen 18 gebildet, die jeweils zwischen einem der Flanschteile 10, 11 und dem Zwischenflansch 15 aufgenommen und von diesen in Umfangsrichtung beaufschlagt sind. Die Federelemente 17, 18 sind in dem hier dargestellten Ausführungsbeispiel aus den ineinander geschachtelten Schraubendruckfedern 19, 20 gebildet.

Die ausgangsseitigen Flanschteile 10, 11 werden abhängig von dem in das Eingangsteil 2 oder dem Ausgangsteil 3 eingeleiteten Drehmoment wechselseitig beaufschlagt und übertragen das anliegende Drehmoment über die Federeinrichtung 16 mit dem Zwischenflansch 15 auf das Ausgangsteil 3 beziehungsweise das Eingangsteil 2. In der Zugphase wird das Drehmoment über die Reibbeläge 8 auf das Eingangsteil 2 übertragen. Die Abstandsbolzen 9 des Eingangsteils 2 schlagen an einem der Flanschteile 10, 11 an, so dass dieses die Federeinrichtung 16 beaufschlagt. Über die Federelemente 17, 18 und den Zwischenflansch 15 wird das Drehmoment auf das andere ausgangsseitige Flanschteil 11, 10 übertragen, das an der Verzahnung 13 anschlägt und das Drehmoment auf die Nabe 12 überträgt. In der Schubphase wird das Drehmoment in umgekehrter Weise von der Nabe 12 auf die Reibbeläge 8 übertragen, indem eines der Flanschteile 11, 10 durch Anschlag an der Verzahnung 13 das Drehmoment auf die Federelemente 17, 18 und den Zwischenflansch 15 auf das andere Flanschteil 10, 11 überträgt, welches an den Abstandsbolzen 9 anschlägt, so dass über diese Drehmoment auf die Flanschteile 6, 7 und schließlich auf die Reibbeläge 8 übertragen wird.

Die Flanschteile 6, 7 sind auf der Nabe 12 unter Zwischenlegung von Kunststoffbuchsen 21, 22 zentriert. Der Zwischenflansch 15 ist gegenüber der Nabe 12 schwimmend angeordnet. Der Zwischenflansch 15 ist mit dem Pendelmassenträger 23 mittels der axial die Ausnehmungen 24, 25 des Flanschteils 10 und des Flanschteils 6 durchgreifenden Abstandsbolzen 26 fest verbunden. Die Ausnehmungen 24, 25 sind derart ausgebildet, dass eine ungestörte Verdrehung des Zwischenflanschs 15 gegenüber den Flanschteilen 6, 10 ermöglicht wird.

Der Pendelmassenträger 23 ist aus den beiden mittels der Abstandsbolzen 27 axial beabstandet miteinander verbundenen Seitenteilen 28, 29 gebildet. Die Seitenteile 28, 29 nehmen zwischen sich die über den Umfang verteilt angeordneten Pendelmassen 30 auf, die in an sich bekannter Weise mittels Pendellagern gegenüber dem Pendelmassenträger 23 im Fliehkraftfeld pendelfähig unter Ausbildung eines drehzahladaptiven Drehschwingungstilgers aufgenommen sind. An dem Innenumfang der Seitenteile 28, 29 ist die beispielsweise aus Kunststoff hergestellte Reibhülse 31 aufgenommen, mittels der der Pendelmassenträger 23 auf dem axialen Ansatz 32 der Nabe 12 zentriert und begrenzt verdrehbar aufgenommen ist. Über die Abstandsbolzen 26 ist der ansonsten schwimmend aufgenommene Zwischenflansch 15 ebenfalls auf der Nabe 12 zentriert.

Die Pendelmassen 30 werden bei ausreichender Fliehkraft nach radial außen beschleunigt und mittels ihrer Pendellager pendelfähig an den Seitenteilen 28, 29 abgestützt. Nimmt die Fliehkraft infolge geringer Drehzahlen der Kupplungsscheibe 1 ab oder ist diese bei stehender Kupplungsscheibe 1 Null, sind die sich jeweils radial über der Drehachse d befindlichen Pendelmassen 30 nach radial innen abgestützt. Hierzu sind die Pendelmassen 30 nach radial innen mittels der radial wirksamen Federelemente 33 wie Schraubendruckfedern abgestützt.

Das Fliehkraftpendel 5 ist schwingungsisoliert zwischen den Federelementen 17, 18 aufgenommen, so dass das relevante Massenträgheitsmoment außer den Pendelmassen 30 lediglich durch den Pendelmassenträger 23, die Abstandsbolzen 26, 27 und den Zwischenflansch 15 gebildet wird.

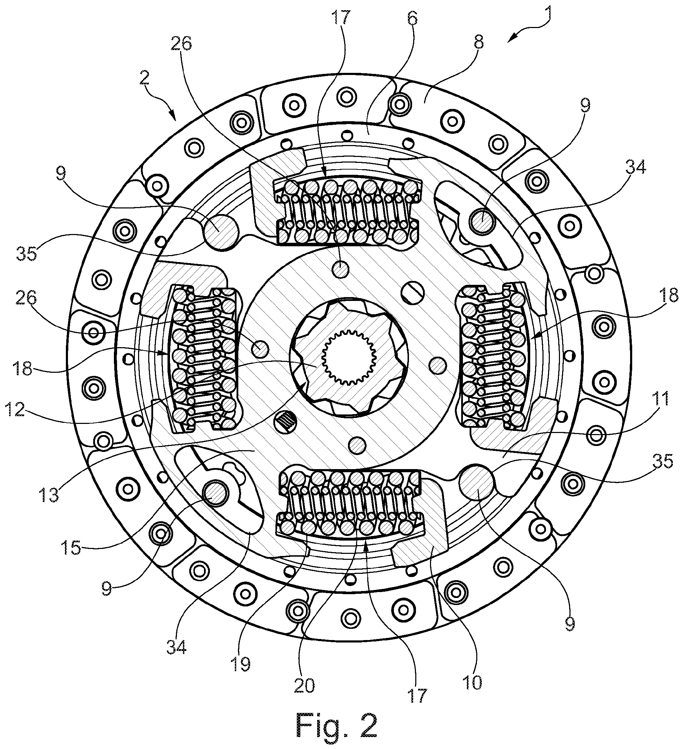

Die Figur 2 zeigt die Kupplungsscheibe 1 der Figur 1 in geschnittener Ansicht. Von dem Eingangsteil 2 ist lediglich das Flanschteil 6 mit den Reibbelägen 8 und den Abstandsbolzen 9 dargestellt. Die Abstandsbolzen 9 durchgreifen teilweise mit Umfangsspiel die Ausnehmungen 34 des Zwischenflanschs 15 und bilden jeweils in eine Drehmomentrichtung Anschläge 35 für die ausgangsseitigen Flanschteile 10, 11, in der dargestellten Betriebsposition für das Flanschteil 11. Zwischen dem Flanschteil 10 und dem Zwischenflansch 15 und dem Flanschteil 11 und dem Zwischenflansch 15 sind jeweils zwei diametral gegenüberliegende Federelemente 17, 18, die aus den Schraubendruckfedern 19, 20 gebildet sind, aufgenommen, beispielsweise leicht vorgespannt. Die Flanschteile 10, 11 sind mittels der Verzahnung 13 mit Verdrehspiel drehschlüssig auf der Nabe 12 aufgenommen. Der Zwischenflansch 15 ist mittels der Abstandsbolzen 26 mit dem nicht einsehbaren Pendelmassenträger 23 des Fliehkraftpendels 5 (Figur 1) fest verbunden.

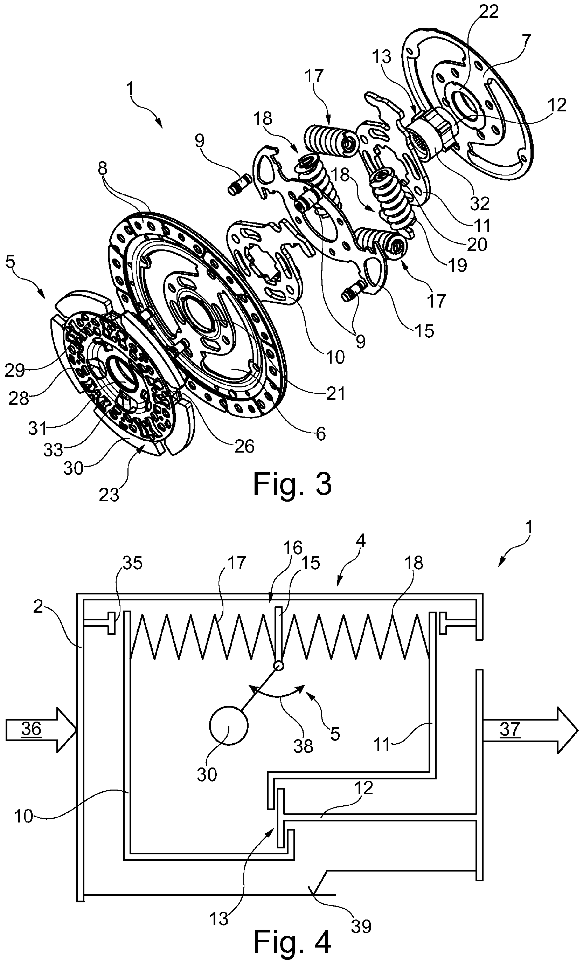

Die Figur 3 zeigt die Kupplungsscheibe 1 mit dem Fliehkraftpendel 5 in Explosionsdarstellung. Das Fliehkraftpendel 5 ist aus dem Pendelmassenträger 23 und den Pendelmassen 30 gebildet. Der Pendelmassenträger 23 ist aus den beiden Seitenteilen 28, 29, die mittels der Abstandsbolzen 26 miteinander axial beabstandet verbunden sind, gebildet. Die Pendelmassen 30 sind nach radial innen mittels der Federelemente 33 abgestützt. Mittels der an den Seitenteilen 28, 29 aufgenommenen Reibhülse 31 ist der Pendelmassenträger 23 an dem axialen Ansatz 32 der Nabe 12 zentriert aufgenommen. Das Fliehkraftpendel 5 ist mittels der Abstandsbolzen 26 fest mit dem Zwischenflansch 15 verbunden. Die ausgangsseitigen Flanschteile 10, 11 flankieren den Zwischenflansch 15 und sind mit Verdrehspiel auf der Verzahnung 13 der Nabe 12 aufgenommen. Die Federelemente 17, 18 sind jeweils zwischen einem der beiden Flanschteile 10, 11 und dem Zwischenflansch 15 verspannbar aufgenommen und aus den Schraubendruckfedern 19, 20 gebildet. Das Flanschteil 6 mit den Reibbelägen 8 und das Flanschteil 7 sind mittels der Abstandsbolzen 9 miteinander verbunden und mittels der Kunststoffbuchsen 21, 22 auf der Nabe 12 zentriert.

Die Figur 4 zeigt ein Prinzipschaltbild der Kupplungsscheibe 1 der Figuren 1 bis 3. In einer Zugphase der Kupplungsscheibe 1 wird das über die Reibungskupplung und die Reibbeläge in die Kupplungsscheibe 1 in Richtung des Pfeils 36 eingetragene Drehmoment von dem Eingangsteil 2 über den Anschlag 35 auf das Flanschteil 10 übertragen. Dieses hebt von der Verzahnung 13 der Nabe 12 ab und beaufschlagt die Federeinrichtung 16 mit den Federelementen 17, dem Zwischenflansch 15 und den Federelementen 18. Die Steifigkeiten der Federelemente 17, 18 können gleich oder verschieden sein. Die Kennlinien der Federelemente 17, 18 können ein-oder mehrstufig sein. Das Drehmoment wird auf das Flanschteil 11 übertragen. Dieses tritt an der Verzahnung 13 in Formschluss mit der Nabe 12, so dass in Richtung des Pfeils 37 das durch den Drehschwingungsdämpfer 4 und das Fliehkraftpendel 5 schwingungsisolierte Drehmoment auf eine Getriebeeingangswelle übertragen wird. Das Fliehkraftpendel 5 mit den in einer Ebene senkrecht zur Drehachse der Kupplungsscheibe 1 entlang des Doppelpfeils 38 schwingenden Pendelmassen 30 weist infolge der geringen Masse ihres Pendelmassenträgers und des Zwischenflanschs 15 ein geringes Massenträgheitsmoment beziehungsweise ein vorteilhaftes Massenverhältnis der Pendelmassen 30 gegenüber den nicht pendelnden Massen auf. Zwischen dem Eingangsteil 2 und der Nabe 12 ist die Reibeinrichtung 39 vorgesehen, die beispielsweise eine zwischen dem Pendelträger und der Nabe 12 angeordnete Reibhülse gebildet sein kann.

In Schubrichtung entgegen der Pfeile 36, 37 nimmt die Nabe 12 das Flanschteil 11 unter Belastung der Federeinrichtung 16 mit. Das über die Federeinrichtung 16 geleitete Drehmoment wird mittels des Flanschteils 10 über den Anschlag 35 auf das Eingangsteil 2 übertragen.

### Bezugszeichenliste

- 1: Kupplungsscheibe
- 2: Eingangsteil
- 3: Ausgangsteil
- 4: Drehschwingungsdämpfer
- 5: Fliehkraftpendel
- 6: Flanschteil
- 7: Flanschteil
- 8: Reibbelag
- 9: Abstandsbolzen
- 10: Flanschteil
- 11: Flanschteil
- 12: Nabe
- 13: Verzahnung
- 14: Verdrehspiel
- 15: Zwischenflansch
- 16: Federeinrichtung
- 17: Federelement
- 18: Federelement
- 19: Schraubendruckfeder
- 20: Schraubendruckfeder
- 21: Kunststoffbuchse
- 22: Kunststoffbuchse
- 23: Pendelmassenträger
- 24: Ausnehmung
- 25: Ausnehmung
- 26: Abstandsbolzen
- 27: Abstandsbolzen
- 28: Seitenteil
- 29: Seitenteil
- 30: Pendelmasse
- 31: Reibhülse
- 32: Ansatz
- 33: Federelement
- 34: Ausnehmung
- 35: Anschlag
- 36: Pfeil
- 37: Pfeil
- 38: Doppelpfeil
- 39: Reibeinrichtung
- d: Drehachse

## Patentansprüche

1. Kupplungsscheibe (1) mit einem Drehschwingungsdämpfer (4) mit einem Eingangsteil (2) und einem Ausgangsteil (3) und einer in Umfangsrichtung zwischen dem Eingangsteil (2) und dem Ausgangsteil (3) wirksam angeordneten Federeinrichtung (16), wobei die Federeinrichtung (16) aus hintereinander geschalteten, durch einen Zwischenflansch (15) getrennten ersten und zweiten Federelementen (17, 18) gebildet ist, sowie einem Fliehkraftpendel (5) mit einem um eine Drehachse (d) der Kupplungsscheibe (1) angeordneten Pendelmassenträger (23) und an diesem auf Pendelbahnen pendelfähig aufgenommenen, über den Umfang verteilt angeordneten Pendelmassen (30), **dadurch gekennzeichnet, dass** der Pendelmassenträger (23) drehfest mit dem Zwischenflansch (15) gekoppelt und auf dem Ausgangsteil (3) zentriert aufgenommen ist.

2. Kupplungsscheibe (1) nach Anspruch 1, **dadurch gekennzeichnet, dass** die Federelemente (17, 18) zwischen zwei ausgangsseitigen, an einer ausgangsseitigen Nabe (12) mit Verdrehspiel aufgenommenen und jeweils von dem Eingangsteil (2) abhängig von einer Drehmomentrichtung wechselseitig beaufschlagten Flanschteilen (10, 11) aufgenommen sind, wobei der Zwischenflansch (15) zwischen den ersten und zweiten Federelemente (17, 18) aufgenommen ist.

3. Kupplungsscheibe (1) nach Anspruch 2, **dadurch gekennzeichnet, dass** der Pendelmassenträger (23) auf der Nabe (12) begrenzt verdrehbar aufgenommen und auf dieser zentriert ist.

4. Kupplungsscheibe (1) nach einem der Ansprüche 1 bis 3, **dadurch gekennzeichnet, dass** zwischen dem Pendelmassenträger (23) und dem Ausgangsteil (3), insbesondere der Nabe (12) eine Reibhülse (31) angeordnet ist.

5. Kupplungsscheibe (1) nach einem der Ansprüche 1 bis 4, **dadurch gekennzeichnet, dass** Drehschwingungsdämpfer (4) und Fliehkraftpendel (5) axial nebeneinander angeordnet sind.

6. Kupplungsscheibe (1) nach einem der Ansprüche 1 bis 5, **dadurch gekennzeichnet, dass** der Pendelmassenträger (23) mittels axial ausgerichteter, das Eingangsteil (2), insbesondere ein Flanschteil (6), insbesondere ein die Reibbeläge (8) aufnehmendes Flanschteil (6) durchgreifender Abstandsbolzen (26) mit dem Zwischenflansch (15) verbunden ist.

7. Kupplungsscheibe nach einem der Ansprüche 1 bis 6, **dadurch gekennzeichnet, dass** der Pendelmassenträger als Pendelflansch mit beidseitig angeordneten Pendelmassen ausgebildet ist.

8. Kupplungsscheibe (1) nach einem der Ansprüche 1 bis 6, **dadurch gekennzeichnet, dass** der Pendelmassenträger (23) aus zwei axial aneinander angeordneten Seitenteilen (28, 29) gebildet ist, welche an einem Pendelabschnitt axial beabstandet sind und zwischen sich die Pendelmassen (30) aufnehmen.

9. Kupplungsscheibe (1) nach einem der Ansprüche 1 bis 8, **dadurch gekennzeichnet, dass** die Pendelmassen (30) mittels radial wirksamer Federelemente (33) gegenüber dem Pendelmassenträger (23) abgestützt sind.

10. Kupplungsscheibe (1) nach einem der Ansprüche 1 bis 9, **dadurch gekennzeichnet, dass** die ersten und zweiten Federelemente (17, 18) dieselbe Steifigkeit aufweisen.

## Claims

1. A clutch disk (1) having a torsional vibration damper (4) having an input part (2) and an output part (3) and a spring device (16) operatively arranged in the circumferential direction between the input part (2) and the output part (3), wherein the spring device (16) is formed from first and second spring elements (17, 18) connected in series and separated by an intermediate flange (15), and a centrifugal pendulum (5) having a pendulum mass carrier (23) arranged about an axis of rotation (d) of the clutch disk (1) and pendulum masses (30) distributed over the circumference, which are received in a pendulum fashion on pendulum tracks, **characterized in that** the pendulum mass carrier (23) is coupled non-rotatably with the intermediate flange (15) and centrally received on the output part (3).

2. The clutch disk (1) according to claim 1, **characterized in that** the spring elements (17, 18) are received between two output-side flange parts (10, 11) which are received on an output-side hub (12) having torsional play and are each acted upon alternately by the input part (2) as a function of a torque direction, wherein the intermediate flange (15) is received between the first and second spring elements (17, 18).

3. The clutch disk (1) according to claim 2, **characterized in that** the pendulum mass carrier (23) is received on the hub (12) so as to be rotatable to a limited extent and is centred thereon.

4. The clutch disk (1) according to one of claims 1 to 3, **characterized in that** a friction sleeve (31) is arranged between the pendulum mass carrier (23) and the output part (3), in particular the hub (12).

5. The clutch disk (1) according to one of claims 1 to 4, **characterized in that** the torsional vibration damper (4) and the centrifugal pendulum (5) are arranged axially next to one another.

6. The clutch disk (1) according to one of claims 1 to 5, **characterized in that** the pendulum mass carrier (23) is connected to the intermediate flange (15) by means of axially aligned spacer bolts (26) passing through the input part (2), in particular a flange part (6), in particular a flange part (6) receiving the friction linings (8).

7. The clutch disk according to one of claims 1 to 6, **characterized in that** the pendulum mass carrier is designed as a pendulum flange having pendulum masses arranged on both sides.

8. The clutch disk (1) according to one of claims 1 to 6, **characterized in that** the pendulum mass carrier (23) is formed from two axially adjacent side parts (28, 29) which are axially spaced apart on a pendulum section and receive the pendulum masses (30) therebetween.

9. The clutch disk (1) according to one of claims 1 to 8, **characterized in that** the pendulum masses (30) are supported with respect to the pendulum mass carrier (23) by means of radially acting spring elements (33).

10. The clutch disk (1) according to one of claims 1 to 9, **characterized in that** the first and second spring elements (17, 18) have the same rigidity.

## Revendications

1. Disque d'embrayage (1) comprenant un amortisseur de vibrations de torsion (4) comportant une partie d'entrée (2) et une partie de sortie (3) et un dispositif ressort (16) disposé activement dans la direction périphérique entre la partie d'entrée (2) et la partie de sortie (3), dans lequel le dispositif ressort (16) est formé de premier et second éléments ressorts (17, 18) connectés en série et séparés par une bride intermédiaire (15), ainsi qu'un pendule à force centrifuge (5) comportant un support de masse pendulaire (23) disposé autour d'un axe de rotation (d) du disque d'embrayage (1) et des masses pendulaires (30) logées sur le support de masse pendulaire sur des pistes pendulaires de manière à pouvoir effectuer un mouvement pendulaire et réparties sur la périphérique, **caractérisé en ce que** le support de masse pendulaire (23) est accouplé de manière fixe en rotation à la bride intermédiaire (15) et logé centré sur la partie de sortie (3).

2. Disque d'embrayage (1) selon la revendication 1, **caractérisé en ce que** les éléments ressorts (17, 18) sont logés entre deux parties de bride (10, 11) côté sortie, lesquelles sont logées sur un moyeu (12) côté sortie avec jeu de rotation et lesquelles sont respectivement alternativement sollicitées par la partie d'entrée (2) en fonction d'une direction de couple, dans lequel la bride intermédiaire (15) est logée entre les premier et second éléments ressorts (17, 18).

3. Disque d'embrayage (1) selon la revendication 2, **caractérisé en ce que** le support de masse pendulaire (23) est logé sur le moyeu (12) de manière à pouvoir tourner de manière limitée et est centré sur celui-ci.

4. Disque d'embrayage (1) selon l'une quelconque des revendications 1 à 3, **caractérisé en ce que**, entre le support de masse pendulaire (23) et la partie de sortie (3), en particulier le moyeu (12), un manchon de friction (31) est disposé.

5. Disque d'embrayage (1) selon l'une quelconque des revendications 1 à 4, **caractérisé en ce que** l'amortisseur de vibrations de torsion (4) et le pendule à force centrifuge (5) sont disposés axialement l'un à côté de l'autre.

6. Disque d'embrayage (1) selon l'une quelconque des revendications 1 à 5, **caractérisé en ce que** le support de masse pendulaire (23) est raccordé, au moyen d'un boulon d'écartement (26) aligné axialement, traversant la partie d'entrée (2), en particulier une partie bride (6), en particulier une partie bride (6) logeant des garnitures de friction (8), à la bride intermédiaire (15).

7. Disque d'embrayage selon l'une quelconque des revendications 1 à 6, **caractérisé en ce que** le support de masse pendulaire est conçu sous la forme d'un flasque pendulaire doté des masses pendulaires disposées des deux côtés.

8. Disque d'embrayage (1) selon l'une quelconque des revendications 1 à 6, **caractérisé en ce que** le support de masse pendulaire (23) est formé de deux parties latérales (28, 29) axialement adjacentes, lesquelles sont espacées axialement sur une section pendulaire et lesquelles logent entre elles les masses pendulaires (30).

9. Disque d'embrayage (1) selon l'une quelconque des revendications 1 à 8, **caractérisé en ce que** les masses pendulaires (30) sont supportées au moyen d'éléments ressorts (33) à action radiale par rapport au support de masse pendulaire (23).

10. Disque d'embrayage (1) selon l'une quelconque des revendications 1 à 9, **caractérisé en ce que** les premier et second éléments ressorts (17, 18) présentent la même rigidité.
